Europäisches Patentamt

European Patent Office

Office européen des brevets

(19)

(11) Veröffentlichungsnummer : **0 021 313**
**B1**

(12) **EUROPÄISCHE PATENTSCHRIFT**

(45) Veröffentlichungstag der Patentschrift :
08.02.84

(21) Anmeldenummer : 80103357.2

(22) Anmeldetag : 16.06.80

(51) Int. Cl.³ : **A 23 L   1/221, A 23 C  19/09**

(54) Gebrauchsfertige, lagerungsbeständige Kräuterwürzpaste und Herstellungsverfahren hierfür.

(30) Priorität : 16.06.79 DE 2924358

(43) Veröffentlichungstag der Anmeldung :
07.01.81 Patentblatt 81/01

(45) Bekanntmachung des Hinweises auf die Patenterteilung : 08.02.84 Patentblatt 84/06

(84) Benannte Vertragsstaaten :
CH FR IT LI

(56) Entgegenhaltungen :
DE-A- 1 517 136
FR-A- 2 091 686
E. CAMPBELL: "Encyclopedia of world cookery", 1968, Ausg. Spring Books Feltham GB
F. CUNSOLO: "Lacuocaintasca salse e sughi", Nov. 1972, Ausg.: Görlich Editore, Milano IT
Die Akte enthält technische Angaben, die nach dem Eingang der Anmeldung eingereicht wurden und die nicht in dieser Patentschrift enthalten sind.

(73) Patentinhaber : CPC INTERNATIONAL INC.
International Plaza P.O. Box 8000
Englewood Cliffs New Jersey 07632 (US)

(72) Erfinder : Biller, Florian, Dipl.-Chem.
Haldenstrasse 1
D-7101 Unterheinriet (DE)
Erfinder : Kellermann, Richard, Dipl-Chem.
Schulgasse 2
D-7107 Neckarsulm (DE)

(74) Vertreter : Deufel, Paul, Dr. et al
Patentanwälte Müller-Boré, Deufel, Schön, Hertel
Lewald, Otto Isartorplatz 6 Postfach 26 02 47
D-8000 München 26 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Gebrauchsfertige, lagerungsbeständige Kräuterwürzpaste und Herstellungsverfahren hierfür

Die Erfindung betrifft eine gebrauchsfertige, lagerungsbeständige Kräuterwürzpaste, insbesondere für Teigwarengerichte, enthaltend Basilikum in einer Menge von 8 bis 80 Gew.-%, Knoblauch in einer Menge von 0,1 bis 8 Gew.-%, Hartkäse in einer Menge von bis zu 80 Gew.-%, Speisefett(e) und, einschließlich der aus den drei erstgenannten Komponenten stammenden Wassermenge, von 12 bis zu 80 Gew.-% Wasser, sowie gegebenenfalls weitere Gewürzkräuter, Würzzutaten, Konservierungs- und/oder Streckmittel sowie das Verfahren zu ihrer Herstellung.

Die Verfeinerung von Speisen mit Würzpasten im weitesten Sinne und insbesondere Kräuterwürzpasten, wie Remoulade oder Kräuterbutter, stellt einen wesentlichen Bestandteil wohl jeder Küche dar, die diese Bezeichnung verdient, und häufig werden sogar der Rang und der Charakter einer Küche mehr durch die zur Verfeinerung ihrer typischen Gerichte verwendeten Würzpasten bestimmt, als durch die Grundgerichte selbst.

Dies trifft sicherlich auf die Teigwarengerichte der europäischen « Nudelländer » mit der auf diesem Gebiet führenden italienischen Küche an der Spitze zu.

Eine der von Kennern der italienischen Teigwarenküche meistgeschätzten Kräutersoßen ist der sogenannte « Pesto », eine Kräuterwürzpaste, deren unverwechselbare sensorische Eigenart im wesentlichen durch den Zusammenklang der Rezepturkomponenten Hartkäse (Parmesan und Pecorino), Knoblauch und — vor allem — Basilikum geprägt wird. Letzteres dürfte der ausschlaggebende Grund dafür sein, daß Pesto bzw. damit zubereitete Nudelgerichte bislang nördlich der Alpen selbst in Gebieten kaum dem Namen nach bekannt sind, in denen andere italienische Nudelgerichte, wie Spaghetti alla Bolognese, längst zum festen Bestandteil des Durchschnittsspeisezettels geworden sind. Basilikum ist nämlich ein Gewürzkraut, das einerseits nur in warmen Klimazonen gedeiht, und andererseits, wie einige andere Würzkräuter, z. B. Petersilie, durch Trocknung oder thermische Sterilisation hinsichtlich seines Würzwertes nicht nur beeinträchtigt wird, sondern diesen praktisch völlig verliert. Da hausgemachter Pesto sehr rasch verdirbt, steht er selbst in Italien nur während der relativ kurzen Zeit zur Verfügung, in der frisches Basilikum geerntet werden kann. Dieser Umstand und die Beliebtheit von Pesto haben natürlich dazu geführt, daß die Nahrungsmittelindustrie in Italien und den benachbarten Mittelmeerländern mit großem Aufwand darum bemüht war, haltbare Handelsprodukte zu entwickeln. Tatsächlich gelang es auch, die Haltbarkeit durch die Verwendung von getrocknetem Basilikum, thermische Sterilisation und Zusatz von chemischen Konservierungsstoffen hinlänglich zu steigern, so daß seit geraumer Zeit als « Pesto » bezeichnete Produkte verschiedener Hersteller im Handel erhältlich sind. Für den Pesto-Liebhaber stellen diese Kräuterwürzpasten jedoch keine Alternative zu frisch zubereitetem Pesto, ja kaum einen akzeptablen Ersatz in den Zeiten dar, in denen Pesto mangels frischen Basilikums nicht küchenmäßig zubereitet werden kann, da sie hinsichtlich der organoleptischen Eigenschaften das Vorbild auch nicht im Entferntesten erreichen.

Der Erfindung lag daher die Aufgabe zugrunde, eine Kräuterwürzpaste der eingangs bezeichneten Art zur Verfügung zu stellen, die einerseits ebenso haltbar wie oder sogar noch lagerungsbeständiger als die bekannten handelsüblichen Produkte ist und andererseits dennoch die organoleptischen Qualitätseigenschaften von küchenmäßig aus frischem Basilikum zubereitetem Pesto zumindest annähernd erreicht.

Diese Aufgabe wird erfindungsgemäß ausgehend von der überraschenden Erkenntnis gelöst, daß man unter Verwendung der bei der küchenmäßigen Zubereitung verwendeten Ausgangsmaterialien, insbesondere frischem Basilikum und Knoblauch, auch ohne thermische Sterilisierung und/oder Zusatz chemischer Konservierungsstoffe, wie Antimykotika, nicht nur organoleptisch einwandfreie, sondern auch lagerungsbeständige Kräuterwürzpasten erhalten kann, wenn man den Hartkäseanteil vergleichsweise hoch wählt und hinsichtlich der quantitativen Zusammensetzung eine Reihe weiterer spezieller Auswahlregeln beachtet.

Gegenstand der Erfindung ist somit eine Kräuterwürzpaste der eingangs bezeichneten Art, die dadurch gekennzeichnet ist, daß sie frisches, d. h. weder getrocknetes noch auf Temperaturen von über 70 °C erhitztes Basilikum und frischen Knoblauch enthält, frei von zugesetzten Konservierungsstoffen, die auf Seite 2722 im Bundesgesetzblatt der BRD, 1977, Tabelle 1, genannt sind, ist, zugesetztes Kochsalz sowie gegebenenfalls MSG in solchen Mengen enthält, daß das Verhältnis der Summe der Anteile an Basilikum und Knoblauch sowie gegebenenfalls weiteren frischen Kräutern in Gew.-% zur Summe der Anteile an Kochsalz und Mononatriumglutamat (MSG) in Gew.-% in einem Bereich von 3 : 1 bis 5 : 1 liegt, mit der Maßgabe, daß das Gewichtsverhältnis von MSG zu Kochsalz höchstens 1 : 3 beträgt, der Hartkäsegehalt mindestens 20 Gew.-% beträgt, der Wassergehalt des Hartkäses im Bereich von 25 bis 50 Gew.-% liegt, mit der Maßgabe, daß das Gewichtsverhältnis seines Salzgehalts zu seinem Wassergehalt kleiner als 1 : 5 ist und das Gewichtsverhältnis des Gesamtwassergehalts zum Gesamtgehalt an Kochsalz und MSG größer als 4 : 1 ist.

Weiterer Gegenstand der Erfindung ist das Verfahren zur Herstellung einer gebrauchsfertigen, lagerungsbeständigen Kräuterwürzpaste, enthaltend (Prozentangaben = Gew.-%) 8 bis 80 % Basilikum 0,2 bis 8 % Knoblauch bis zu 80 % Hartkäse Speisefette 12 bis 80 % Wasser (einschließlich der in den Komponenten a) bis c) enthaltenden Wassermenge) gegebenenfalls weitere Gewürzkräuter, Würzzusätze, Konservierungs- und/oder Streckmitteln dadurch gekennzeichnet, daß man frisches von Stengeln befreites Basilikum mit einer innigen Mischung von frischem gemahlenem Knoblauch und Salz sowie allen weiteren in kristalliner Form zuzugebenden Zusätzen, wie Mononatriumglutamat (MSG), versetzt, diese Komponenten in einer Misch- und Zerkleinerungsvorrichtung vorzerkleinert, vorzugsweise auf eine Teilchengröße der Basilikumblätter von durchschnittlich 1 bis 5 mm, diesen vorzerkleinerten Komponenten mindestens etwa 20 % Hartkäse in zerkleinerter Form, wobei mindestens 90 % des Käses eine Teilchengröße < 2 mm aufweisen, zusetzt, und wobei der Wassergehalt des Käses 25 bis 50 % beträgt mit der Maßgabe, daß das Gewichtsverhältnis seines Kochsalzgehaltes zu seinem Wassergehalt < 1 : 5 ist, und diese Komponenten innig unter weiterem Zerkleinern untermischt, oder die Kombination von Basilikum, gemahlenem Knoblauch und Salz dem in der Misch- und Zerkleinerungsvorrichtung vorgelegtem vorzerkleinertem Käse zufügt und die Komponenten dann der Vorzerkleinerung unterzieht, dann die Speisefette, vorzugsweise in Form eines plastischen Fettgemisches zufügt und die gesamten Komponenten weiter zerkleinert und homogenisiert, wobei bei einem gegebenenfalls vorgenommenen Zusatz von Mononatriumglutamat das Verhältnis (Summen jeweils ausgedrückt in Gew.-%) Basilikum + Knoblauch + gegebenenfalls weitere frische Gewürzkräuter : Kochsalz + MSG = 3 : 1 bis 5 : 1 ist, mit der Maßgabe, daß das Gewichtsverhältnis von MSG zu Kochsalz höchstens 1 : 3 beträgt.

In der FR-A-20 91 686 wird ein Verfahren zur Behandlung von frischen Basilikumblättern beschrieben. Der wesentliche Unterschied zwischen dem dort beschriebenen Verfahren und dem Anmeldungsgegenstand besteht darin, daß in dem bekannten Falle die frischen Basilikumblätter einer Hitzebehandlung unterzogen werden, um zu einem Produkt zu gelangen, das unter Erhaltung der geschmacklichen Eigenschaften ohne Zusatz lagerungsfähig ist.

Eine derartige Hitzebehandlung ist erfindungsgemäß nicht vorgesehen und auch aufgrund der der Erfindung zugrunde liegenden Aufgabe nicht möglich. Die erfindungsgemäße Aufgabe bestand nämlich darin, ein Produkt, das frisches Basilikum enthält, zu schaffen, d. h. ein Produkt, das dem klassischen Pesto nachgebildet ist, wobei in diesem Falle das Basilikum lediglich zerkleinert wird. Bei einem derartigen Produkt ist natürlich die Haltbarkeit ein Problem. Diese Haltbarkeit wird in überraschender Weise durch die Kombination der vorstehend erwähnten Bestandteile sowie durch Einhaltung der definierten Mengenverhältnisse erzielt.

Die Kräuterwürzpasten der Erfindung weisen, wie bereits erwähnt, gegenüber dem Stand der Technik eine Reihe fortschrittlicher Eigenschaften auf. So sind sie den bekannten Handelsprodukten in bezug auf Farbe, Geruch und Geschmack klar überlegen, wobei dieser Unterschied mit zunehmender Lagerungsdauer überraschenderweise nicht kleiner sondern sogar größer wird, und kommen selbst küchenmäßig frisch zubereitetem Pesto trotz der, insbesondere hinsichtlich des Hartkäsegehalts, erheblichen Rezepturunterschiede erstaunlich nahe. Gleichzeitig sind sie nicht nur küchenmäßig hergestelltem Pesto bezüglich der Lagerungsbeständigkeit in jeder Hinsicht, insbesondere der mikrobiologischen Haltbarkeit, der Separationsneigung, der Farb- und Geschmacksstabilität sowie der Ranzigkeitsbeständigkeit weit überlegen, sondern übertreffen diesbezüglich überraschenderweise sogar die bekannten Industrieprodukte — vor allem in angebrochenem Zustand — und zwar insbesondere bezüglich der mikrobiologischen Stabilität, der Separationsneigung, sowie der Farb- und Geschmacksstabilität.

Die überlegenen Eigenschaften der erfindungsgemäßen Kräuterwürzpasten lassen sich aus ihrer durch die vorstehend genannten empirischen Auswahlregeln bestimmten Zusammensetzung bislang nicht schlüssig erklären, und zwar insbesondere nicht hinsichtlich ihrer hervorragenden Lagerungsbeständigkeit, die, wie ein Vergleich mit den klassischen Pesto-Küchenrezepten klar erkennen läßt, jedenfalls nicht durch eine drastische Erhöhung des Salzzusatzes erreicht wird.

Der Basilikumgehalt erfindungsgemäßer Kräuterwürzpasten wird zweckmäßig in einem Bereich von 9 bis 60, vorzugsweise 10 bis 40 und insbesondere 12 bis 24 Gew.-% gewählt und liegt somit in der Regel mehr oder weniger deutlich unter den bei klassischen Küchenrezepten üblichen Werten von etwa 50 Gew.-%, ohne daß deshalb signifikante Aromaeinbußen in Kauf genommen werden müssen. Es sei in diesem Zusammenhang darauf hingewiesen, daß bei der Mitverwendung weiterer frischer Würzkräuter zur Geschmacksvariation und/oder von im wesentlichen geschmacksneutralen frischen Blattgemüsen als farbgebende Streckmittel der Gesamtgehalt zweckmäßigerweise so gewählt werden sollte, daß die für die essentielle Komponente Basilikum angegebenen Höchstwerte nicht wesentlich überschritten werden und der Basilikumgehalt dennoch in dem empfohlenen Bereich liegt.

Wie bereits erwähnt, ist es ein wesentliches Merkmal der erfindungsgemäßen Kräuterwürzpasten, daß sie frisches Basilikum enthalten, d. h. Basilikum, das weder getrocknet noch über 70 °C erhitzt wurde, um es haltbar zu machen. Tatsächlich soll vorzugsweise keine Erwärmung auf Temperaturen über 30 °C erfolgen.

Vorzugsweise verwendet man zur Herstellung der Kräuterwürzpaste der Erfindung Basilikum (und gegebenenfalls andere Gewürzkräuter) in frischgeerntetem Zustand, d. h. daß die Kräuter sofort nach der Ernte verarbeitet oder eingefroren und bis zur Verarbeitung tiefgefroren zwischengelagert werden. Dabei ist keinerlei Vorbehandlung zur Verminderung der Keimzahl erforderlich, da die Keimzahlen erfindungsgemäßer Kräuterwürzpasten überraschenderweise nicht nur nicht zunehmen, sondern nach der Herstellung sogar rasch abfallen. Vor der Verarbeitung braucht man daher die Würzkräuter allenfalls durch Waschen mit kühlem, klarem Wasser zu reinigen, wodurch keine nennenswerten Aromaverluste eintreten. Weiterhin sei angemerkt, daß tiefgefrorene Würzkräuter vor der Verarbeitung nicht aufgetaut

# 0 021 313

zu werden brauchen, d. h. in gefrorenem Zustand (energiesparend und aromaschonend) gemahlen und der Masse einverleibt werden können.

Der Knoblauchgehalt der erfindungsgemäßen Kräuterwürzpasten wird im wesentlichen entsprechend dem gewünschten Geschmack gewählt und liegt zweckmäßig im einem Bereich von 0,5 bis 6, vorzugsweise 1 bis 5 und insbesondere 1,5 bis 3,5 Gew.-%.

Eine besondere Bedeutung kommt dem Hartkäsegehalt zu, der bei den erfindungsgemäßen in der Regel deutlich höher als bei den bekannten Kräuterwürzpasten ist und insbesondere wesentlich über dem von nach traditionellen Rezepturen küchenmäßig zubereitetem Pesto (ca. 10 Gew.-%) liegt. Zweckmäßig wählt man einen Hartkäsegehalt in einem Bereich von 35 bis 75, vorzugsweise 40 bis 65 und insbesondere 45 bis 60 Gew.-%.

Anzumerken ist in diesem Zusammenhang noch, daß für alle Zwecke der Erfindung nicht nur Hartkäse im engeren Sinn des Wortes, sondern auch Schmelzkäsezubereitungen auf Hartkäsebasis geeignet sind, bei deren Verwendung es sich erfahrungsgemäß meist empfiehlt, Gehalte in der Nähe der oberen Grenzwerte der vorgeschlagenen Bereiche zu wählen.

Schmelzkäsezubereitungen sind zwar häufig «verarbeitungstechnisch» vorteilhaft, wirtschaftlich und in konstanterer Qualität als Hartkäsesorten erhältlich, jedoch sind letztere in geschmacklicher Hinsicht vorzuziehen, wobei vorallem dann, wenn ein klassischem Pesto möglichst vollkommen gleichender Geschmack erzielt werden soll, die Verwendung von Parmesan und/oder Pecorino besonders zu empfehlen ist.

Ein weiterer bei der Auswahl des Hartkäses zu beachtender Gesichtspunkt ist dessen Wassergehalt, der in der Regel etwa 45, vorzugsweise 40 und insbesondere etwa 35 Gew.% nicht übersteigen sollte.

Ferner spielt, wie weiter oben bereits erwähnt, auch der Salzgehalt bzw. das Verhältnis des Salzgehalts zum Wassergehalt des Hartkäses eine wesentliche Rolle, der bzw. das mit Rücksicht auf die Haltbarkeit möglichst hoch, aus geschmacklichen Gründen jedoch möglichst klein sein sollte. Überraschenderweise wurde diesbezüglich gefunden, daß für die Zwecke der Erfindung Hartkäse mit Salzgehalt/Wassergehalt-Verhältnissen eingesetzt werden können, die deutlich unter dem zur Erzielung eines mikrobiologisch beständigen Produkts vermeintlich erforderlichen Wert (ca. 1 : 4) liegen, ja häufig sogar kleiner als 1 : 6 sind und fallweise sogar unter 1 : 8 liegen können.

Ein weiteres vorteilhaftes Merkmal der Kräuterwürzpasten der Erfindung ist darin zu sehen, daß sie trotz eines erstaunlich hohen Verhältnisses des Gesamtwassergehalts zum Gesamtgehalt an Kochsalz und MSG auch in bezug auf mikrobiologischen Verderb außergewöhnlich lagerungsbeständig sind und in der Regel selbst dann noch eine ausreichende Haltbarkeit aufweisen, wenn dieses Verhältnis über 4,4 : 1 oder sogar über 4,6 : 1 liegt.

Um hinsichtlich der vorstehend erörterten Komponenten eine möglichst große Wahlfreiheit zu erreichen, wird die Konsistenz der erfindungsgemäßen Kräuterwürzpasten vorteilhafterweise im wesentlichen und meist sogar auschließlich durch entsprechende Wahl der Speisefettkomponente nach Art und Menge eingestellt.

Bewährt haben sich dabei in der Regel Speisefettmengen von 7 bis 50, vorzugsweise 12 bis 45 und insbesondere 18 bis 36 Gew.-%.

Bezüglich der Art der erfindungsgemäß zu verwendenden Fette bzw. Öle sind für die Auswahl sowohl geschmackliche als auch «technologische» Gesichtspunkte zu berücksichtigen. Zur Erzielung geschmacklich interessanter abgerundeter und/oder besonders typischer Produkte eignen sich vor allem Fette und/oder Öle mit kräftigem charakteristischem Eigengeschmack, wie Anchovisöl, Schweineschmalz und ausgelassener Speck, sowie insbesondere das Öl der klassischen Pesto-Rezepte, Olivenöl. Mit diesen geschmacklich bevorzugten Speisefetten lassen sich jedoch die gewünschten Konsistenzeigenschaften in der Regel nur in einem sehr schmalen Mengenbereich und häufig überhaupt nicht oder allenfalls dann erzielen, wenn die Produktkonsistenz auch bei der Wahl eines oder mehrerer anderer Rezepturkomponenten als Auswahlkriterium berücksichtigt wird.

Vorzugsweise werden erfindungsgemäß deshalb sogenannte «plastische» Fette bzw. Fettgemische und insbesondere Gemische aus bei Raumtemperatur flüssigen Fetten bzw. Ölen und Fetten mit Schmelzpunkten im Bereich von etwa 35 bis 40 °C, sowie gegebenenfalls einem relativ geringen Anteil im Vergleich zu den vorstehenden Fettsorten hochschmelzender Fette (Schmelzpunkt etwa 60 °C und höher), verwendet.

Wie bereits erwähnt, enthalten bevorzugte erfindungsgemäße Kräuterwürzpasten außer den notwendigen Bestandteilen auch noch eine oder mehrere Eventualkomponente(n).

Hierfür kommen insbesondere weitere Gewürzkräuter, vor allem Majoran, Origano, Petersilie, Liebstöckel, Beifuß, Schnittlauch und/oder Dill, weitere Gewürze im weitesten Sinn (Würzzusätze), insbesondere zerkleinerte Nüsse und/oder Pinienkerne, aber auch tierische Würzzusätze, wie Sardellen-, Anchovis- oder andere Fischpaste, Fleischextrakt und/oder Bratensaft, sowie gegebenenfalls sogenannte «Streckmittel», z. B. frische, farbintensive Blattgemüseteile, insbesondere Blattspinat, in Betracht.

Wesentlich für die überraschende Haltbarkeit und Stabilität des Produktes dürfte das Verfahren zur Herstellung sein, und zwar sowohl hinsichtlich der Auswahl der verwendeten Bestandteile als auch der Art der Herstellung.

Bei der Herstellung der erfindungsgemäßen Kräuterwürzpasten ist, abgesehen von der Rezeptur, vor allem darauf zu achten, daß frische Kräuter und diese enthaltende Mischungen keiner Bearbeitung

4

unterworfen werden, die zu starker thermischer und/oder oxydativer Beanspruchung und damit zu vermeidbarer Aromaschädigung führen kann.

Das verwendete Basilikum wird zweckmäßigerweise sofort nach dem Ernten tiefgefroren. Dies hat den besonderen Vorteil, daß das tiefgefrorene Gewürzkraut durch abklopfen, als eine Art « Dreschen », mechanisch oder maschinell von den Stengeln befreit werden kann, was bei nichtgefrorenem Basilikum von Hand erfolgen müßte.

Falls das Basilikum gewaschen wird, muß es bei verhältnismäßig tiefen Temperaturen, maximal 30 °C, wieder auf den nativen Feuchtigkeitsgehalt getrocknet werden, also alles anhaftende Wasser entfernt werden.

Das Basilikum kann dem vorgelegten Käse zugegeben werden, jedoch ist es insbesondere bei weniger intensiv arbeitenden Misch- und Zerkleinerungsvorrichtungen technisch vorteilhaft, erst das Basilikum, kombiniert mit Knoblauch/Salzgemisch und allen anderen trocknen, pulverförmigen Zusätzen, vorzuzerkleinern und dann den Käse zuzusetzen. Dabei wird das entstielte Basilikum in einem Kutter oder einer sonstigen geeigneten Misch- und Zerkleinerungsvorrichtung mit einer Mischung aus frisch gemahlenem Knoblauch und Salz 1 : 1 sowie gegebenenfalls weiterem Salz und allen weiteren zuzusetzenden kristallinen Zusätzen, wie Natriumglutamat, versetzt und gekuttert, bis die durchschnittliche Teilchengröße der Basilikumblätter 1 bis 5 mm beträgt. Es ist darauf zu achten, daß nicht zu sehr verkleinert wird. Die genannte Größe der Blattfragmente von 1 bis 5 mm ist aus geschmacklichen und ästhetischen Gründen zweckmäßig.

Dieser vorzerkleinerten Mischung wird dann der geriebene Hartkäse, vorzugsweise Parmesan oder Pecorino, der derart zerkleinert ist, daß zumindest 90 % eine Teilchengröße von < 2 mm haben, zugesetzt und erneut gekuttert. Als nächster Schritt wird dann die plastische Fettmischung zugegeben und es wird kurz weitergekuttert. Auch im Endprodukt sollen die Fragmente der Basilikumblätter noch deutlich sichtbar sein, also zum größten Teil eine Teilchengröße von 1 mm oder etwas mehr haben.

Wie auch in den Beispielen ausgeführt wird, soll das ganze Verfahren zweckmäßig unter Schutzgas, beispielsweise Stickstoff oder $CO_2$, durchgeführt werden, wobei ein Zusatz von festem $CO_2$ (Trockeneis) technisch besonders günstig sein kann, da dies einerseits für die Schutzgasatmosphäre, andererseits jedoch auch für gute Kühlung sorgt, da beim Kuttern stets gut gekühlt werden muß, um eine Erwärmung der Mischung stets zu verhindern. In warmen Ländern sollte andernfalls eine Kühlung der Rohstoffe und des Mischers erfolgen, gegebenenfalls ist in einem konditionierten Raum zu arbeiten, um die Mischung zu keinem Zeitpunkt der Herstellung auf Temperaturen von über 30 °C kommen zu lassen. Dies ist nicht nur wichtig um die Geschmackseigenschaften zu erhalten, sondern auch für die Konsistenz des Produktes.

Bei Trockeneiszugabe ist darauf zu achten, daß das Gemisch nicht durch absorbiertes $CO_2$ übermäßig treibt, da man kein schaumiges Erzeugnis haben will, sondern ein Produkt, das dem küchenmäßig hergestellten Pesto sowohl im Geschmack als auch im Aussehen entspricht.

Das Produkt ist überraschenderweise sehr haltbar und wird weder mikrobiologisch angegriffen noch wird es ranzig, noch zeigt der Käse, wie dies häufig bei ähnlichen Erzeugnissen der Fall ist, nach Lagerung einen seifigen Geschmack noch verliert das Basilikum seine frische grüne Farbe. Das Produkt behält auch bei langer Lagerung die frische Duft- und Geschmacksnote von küchenmäßig hergestelltem Pesto bei.

Der Grund hierfür ist derzeit unbekannt. Es kann, ohne daß eine Festlegung auf diese Theorie erfolgen soll, eventuell folgenden Tatsachen zugeschrieben werden :

Durch die Verwendung von frischem Knoblauch wird dessen bakteriozide Wirkung voll erhalten und ausgewertet. Außerdem wird die chemische Reaktionsfähigkeit der im Knoblauch enthaltenden Schwefelverbindungen durch die sofortige Verarbeitung ausgenutzt.

Die Verwendung von Hartkäse oder Schmelzkäsezubereitung auf Hartkäsebasis, wobei, wie erwähnt, Parmesan und Pecurino bevorzugt sind, trägt ebenfalls zur bakteriziden Wirkung bei. Die in derartigen Käsesorten enthaltenden freien Fettsäuren, insbesondere Propionsäure, sind ebenfalls einer chemischen Reaktion mit den übrigen Bestandteilen der Kräuterpaste zugänglich und tragen so zu deren Stabilisierung bei.

Auch die bevorzugte Verwendung des plastischen Fettgemisches führt durch die Umhüllung der sonstigen teilchenförmigen Komponenten der Paste zu einer weiteren Stabilisierung und Erhöhung der Lagerfestigkeit unter voller Erhaltung des Geschmacks und durch die Eigenkonsistenz des plastischen Fettgemisches besteht nicht die Gefahr einer Separierung.

Die Kräuterwürzpasten der Erfindung können zwar grundsätzlich in jeder für derartige Produkte üblichen Form konfektioniert werden, jedoch füllt man sie vorteilhafterweise in Tuben ab, wofür sie sich aufgrund ihrer meist in einem relativ breiten Temperaturbereich plastischen bzw. pastösen Konsistenz hervorragend eignen.

Die Beispiele erläutern die Erfindung.

Das in den Beispielen verwendete « plastische Fettgemisch » ist eine Mischung aus ungehärtetem Erdnußöl (79 Gew.-%), teilweise gehärtetem Pflanzenöl mit einem Schmelzpunkt von 36 bis 38 °C und, als Rest, durchgehärtetem Pflanzenöl.

## 0 021 313

### Beispiel 1

Es wird eine typische erfindungsgemäße (Pesto-) Kräuterwürzpaste nach folgender Rezeptur hergestellt:

| Bestandteil | Anteil | |
|---|---|---|
| | kg | % |
| Parmesan, frisch, gerieben | 12,0 | 50 |
| Basilikum, frisch, tiefgefroren | 3,4 | 14 |
| Knoblauch, frisch, gerieben (1:1 mit Kochsalz vermischt) | 1,2 | 5 |
| Speisesalz | 0,5 | 2 |
| Natriumglutamat | 0,2 | 1 |
| Plastisches Fettgemisch | 6,7 | 28 |
| | 24,0 | 100 |

In einem Kutter wird der grob geriebene Parmesan vorgelegt und auf den gewünschten Feinheitsgrad zerkleinert. Dann wird das tiefgefrorene Basilikum zusammen mit der Knoblauch-Salzmischung und den pulverförmigen Rezeptbestandteilen zugegeben.

Nachdem die Mischung homogen gekuttert ist, wird das Fettgemisch zugegeben und ebenfalls eingekuttert. Für alle 3 Schritte ist jeweils die gleiche Kutterzeit zweckmäßig. Die Arbeitsgänge im Kutter werden vorteilhafterweise unter Durchspülen der Mischkammer mit Stickstoff durchgeführt.

Die so erhaltene Paste wird in Tuben abgefüllt und folgenden Qualitätsprüfungen unterzogen:

### Sensorische Beurteilung

```
Zeitpunkt der Prüfung: 2 Wochen nach Herstellung
                  und  2 Monate nach Herstellung
                 ohne signifikante Unterschiede
Geruch:                   gut
Geschmack:                gut
Aussehen der Paste:       grün-gelblich
Allgemeine Beurteilung: Mundet gut nach Basilikum und
                          Parmesan; sieht appetitlich aus
Rezeptur des Testgerichts: Spaghetti (roh 100 g) ge-
                          kocht 280-300 g
                          (Pesto-)Paste 20 g
```

### Mikrobiologische Prüfung

| | |
|---|---|
| Gesamtkoloniezahl (GKZ) frisch | 3 500 |
| Gesamtkoloniezahl (GKZ) nach 200 Tagen | 205 |

### Bestimmung der Peroxidzahl (POZ)

| | |
|---|---|
| Einen Tag nach Herstellung | 0 |
| 200 Tage nach Herstellung | 0 |

6

## Beispiel 1a

Man kann das obige Beispiel auch wie folgt abändern, was insbesondere technisch dann zu empfehlen ist, wenn kein sehr intensiv arbeitender Kutter verwendet wird.

Die im Beispiel 1 aufgeführten Bestandteile werden wie folgt verarbeitet :

Tiefgefrorene, entstielte Basilikum wird zusammen mit der Knoblauch-Salzmischung und den anderen pulverförmigen Rezeptbestandteilen, nämlich Speisesalz und Natriumglutamat, in den Kutter gegeben und es wird vorzerkleinert, bis die Basilikumblätter eine Fragmentgröße von ca. 1 bis 5 mm haben. Hierfür genügt für die angegebene Menge eine Zeit von ca. 60 s.

Dann wird der geriebene Parmesan oder Pecorinokäse zugegeben, wobei mindestens 90 % des Käses eine Teilchengröße unter 2 mm aufweisen sollen und die Komponenten werden kurze Zeit weitergekuttet, zweckmäßig 30 s.

Dann werden die Speisefette zugesetzt und es wird noch ca. 15 s weitergekuttet. Die so erhaltene Paste wird in Tuben abgefüllt und ergibt bei der Qualitätsprüfung innerhalb der Fehlergrenzen die gleichen Werte, wie sie für Beispiel 1 angeführt sind.

## Beispiel 2

Es wird eine geschmacklich besonders hochwertige erfindungsgemäße (Pesto-) Kräuterwürzpaste nach folgender Rezeptur hergestellt :

| Bestandteil | Anteil | |
|---|---|---|
| | kg | % |
| Parmesan, frisch, gerieben | 12,0 | 50 |
| Basilikum, frisch, tiefgefroren | 3,0 | 12,5 |
| Knoblauch, frisch, gerieben (1:1 mit Kochsalz gemischt) | 1,0 | 4,2 |
| Salz | 0,5 | 2,1 |
| Schwarzer Pfeffer, grobe Mahlung | 0,2 | 0,8 |
| Pinienkerne, grob zerkleinert | 0,5 | 2,1 |
| Sardellen in Salz eingelegt, zerkleinert | 0,2 | 0,8 |
| Plastisches Fettgemisch mit 30 % Olivenöl | 6,6 | 27,5 |
| | 24,0 | 100,0 |

Die Mischung erfolgt analog Beispiel 1 oder 1a, wobei jedoch die Pinienkerne erst kurz vor Beendigung des Mischvorgangs zugegeben werden, um zu starke Zerkleinerung zu vermeiden.

## Beispiel 3

Analog Beispiel 1 oder 1a wird nach folgender Rezeptur eine weitere erfindungsgemäße (Pesto-) Kräuterwürzpaste hergestellt, die insbesondere die Verwendbarkeit von Schmelzkäsezubereitungen statt Hartkäse im engeren Sinne des Wortes erläutert :

(Siehe Tabelle, Seite 8 f.)

| Bestandteil | Anteil | |
|---|---|---|
| | kg | % |
| Schmelzkäse mit Parmesangeschmack, geraffelt | 15,0 | 50 |
| Basilikum, frisch, tiefgefroren | 3,5 | 11,7 |
| Knoblauch, frisch, gerieben (1:1 mit Kochsalz vermischt) | 1,0 | 3,3 |
| Speisesalz | 1,5 | 5,0 |
| Zucker | 1,0 | 3,3 |
| Plastisches Fettgemisch | 7,0 | 23,3 |
| Natriumglutamat | 0,5 | 1,7 |
| Würzmischung [1] | 0,5 | 1,7 |
| | 30,0 | 100,0 |

[1] Handelsübliche Würzmischung Aromat aus 50 Gew.-% Dill, 20 Gew.-% Mononatriumglutamat, 20 Gew.-% Maltodextrin und 10 Gew.-% Gewürzextrakten und verarbeitungstechnischen Hilfsstoffen, insbesondere Fett.

Die Haltbarkeit der Kräuterwürzpasten der Beispiele 2 und 3, insbesondere in mikrobiologischer Hinsicht, entspricht der der Beispiele 1 und 1a.

**Ansprüche**

1. Gebrauchsfertige, lagerungsbeständige Kräuterwürzpaste, insbesondere für Teigwarengerichte, enthaltend Basilikum in einer Menge von 8 bis 80 Gew.-%, Knoblauch in einer Menge von 0,1 bis 8 Gew.-%, Hartkäse in einer Menge von bis zu 80 Gew.-%, Speisefett(e) und, einschließlich der aus den drei erstgenannten Komponenten stammenden Wassermenge, von 12 bis zu 80 Gew.-% Wasser, sowie gegebenenfalls weitere Gewürzkräuter, Würzzusätze, Konservierungs- und/oder Streckmittel, dadurch gekennzeichnet, daß sie frisches, d. h. weder getrocknetes noch auf Temperaturen von über 70 °C erhitztes Basilikum und frischen Knoblauch enthält, frei von zugesetzten Konservierungsstoffen, die auf Seite 2722 im Bundesgesetzblatt der BRD, 1977, Tabelle I, genannt sind, ist zugesetztes Kochsalz sowie gegebenenfalls MSG in solchen Mengen enthält, daß das Verhältnis der Summe der Anteile an Basilikum und Knoblauch sowie gegebenenfalls weiteren frischen Kräutern in Gew.-% zur Summe der Anteile an Kochsalz und Mononatriumglutamat (MSG) in Gew.-% in einem Bereich von 3 : 1 bis 5 : 1 liegt, mit der Maßgabe, daß das Gewichtsverhältnis von MSG zu Kochsalz höchstens 1 : 3 beträgt, der Hartkäsegehalt mindestens 20 Gew.-% beträgt, der Wassergehalt des Hartkäses im Bereich von 25 bis 50 Gew.-% liegt, mit der Maßgabe, daß das Gewichtsverhältnis seines Salzgehalts zu seinem Wassergehalt kleiner als 1 : 5 ist und das Gewichtsverhältnis des Gesamtwassergehalts zum Gesamtgehalt an Kochsalz und MSG größer als 4 : 1 ist.

2. Kräuterwürzpaste nach Anspruch 1, dadurch gekennzeichnet, daß sie 9 bis 60, vorzugsweise 10 bis 40 und insbesondere 12 bis 24 Gew.-% Basilikum enthält.

3. Kräuterwürzpaste nach Anspruch 1 oder 2, dadurch gekennzeichnet, daß sie erntefrisch verarbeitetes und/oder eingefrorenes Basilikum enthält.

4. Kräuterwürzpaste nach einem der Ansprüche 1 bis 3, dadurch gekennzeichnet, daß sie 0,5 bis 6, vorzugsweise 1 bis 5 und insbesondere 1,5 bis 3,5 Gew.-% Knoblauch enthält.

5. Kräuterwürzpaste nach einem der Ansprüche 1 bis 4, dadurch gekennzeichnet, daß sie 35 bis 75, vorzugsweise 40 bis 65 und insbesondere 45 bis 60 Gew.-% Hartkäse enthält.

6. Kräuterwürzpaste nach einem der Ansprüche 1 bis 5, dadurch gekennzeichnet, daß sie einen geschmacksintensiven Hartkäse, insbesondere Parmesan und/oder Pecorino enthält.

7. Kräuterwürzpaste nach einem der Ansprüche 1 bis 6, dadurch gekennzeichnet, daß sie Hartkäse mit einem Wassergehalt von höchstens 45, vorzugsweise höchstens 40 und insbesondere nicht mehr als 35 Gew.-% enthält.

8. Kräuterwürzpaste nach einem der Ansprüche 1 bis 7, dadurch gekennzeichnet, daß sie Hartkäse enthält, bei dem das Gewichtsverhältnis seines Salzgehalts zu seinem Wassergehalt kleiner als 1 : 6 und vorzugsweise kleiner als 1 : 8 ist.

9. Kräuterwürzpaste nach einem der Ansprüche 1 bis 8, dadurch gekennzeichnet, daß sie ein Gewichtsverhältnis des Gesamtwassergehalts zum Gesamtgehalt an Kochsalz und MSG von mindestens 4,4 : 1 und vorzugsweise mehr als 4,6 : 1 aufweist.

10. Kräuterwürzpaste nach einem der Ansprüche 1 bis 9, dadurch gekennzeichnet, daß sie durch entsprechende Wahl des zugemischten Speisefettanteils nach Art und Menge auf die gewünschte Konsistenz eingestellt ist.

11. Kräuterwürzpaste nach einem der Ansprüche 1 bis 10, dadurch gekennzeichnet, daß sie 7 bis 50, vorzugsweise 12 bis 45 und insbesondere 18 bis 36 Gew.-% zugemischte(s) Speisefett(e) enthält.

12. Kräuterwürzpaste nach einem der Ansprüche 1 bis 11, dadurch gekennzeichnet, daß sie als zugemischte(s) Speisefett(e) ein plastisches Fett bzw. Fettgemisch und insbesondere Gemisch aus bei Raumtemperatur flüssigen Fetten bzw. Ölen und bei 35 bis 40 °C schmelzenden Fetten sowie gegebenenfalls geringen Mengen im Vergleich zu den vorstehenden Fettsorten hochschmelzender Fette, insbesondere durchgehärtete Pflanzenöle, enthalten.

13. Kräuterwürzpaste nach einem der Ansprüche 1 bis 12, dadurch gekennzeichnet, daß sie als zugemischte(s) Speisefett(e) mindestens teilweise Fett(e) bzw. Öl(e) mit kräftigem charakteristischem Eigengeschmack, insbesondere Olivenöl, Anchovisöl, Schweineschmalz und/oder ausgelassenem Speck enthält.

14. Kräuterwürzpaste nach einem der Ansprüche 1 bis 13, dadurch gekennzeichnet, daß sie weitere, vorzugsweise frische Gewürzkräuter, insbesondere Majoran, Origano, Petersilie, Liebstöckel, Schnittlauch und/oder Dill enthält.

15. Kräuterwürzpaste nach einem der Ansprüche 1 bis 14, dadurch gekennzeichnet, daß sie weitere Würzzusätze, insbesondere zerkleinerte Nüsse und/oder Pinienkerne enthält.

16. Kräuterwürzpaste nach einem der Ansprüche 1 bis 15, dadurch gekennzeichnet, daß sie Streckmittel, insbesondere frische, farbintensive Blattgemüseteile mit vorzugsweise allenfalls schwach ausgeprägtem Eingengeschmack, insbesondere Spinat, enthält.

17. Verfahren zur Herstellung einer gebrauchsfertigen, lagerungsbeständigen Kräuterwürzpaste, enthaltend (Prozentangaben = Gew.-%) 8 bis 80 % Basilikum 0,2 bis 8 % Knoblauch bis zu 80 % Hartkäse Speisefette 12 bis 80 % Wasser (einschließlich der in den Komponenten a) bis c) enthaltenden Wassermenge) gegebenenfalls weitere Gewürzkräuter, Würzzusätze, Konservierungs- und/oder Streckmitteln, dadurch gekennzeichnet, daß man frisches von Stengeln befreites Basilikum mit einer innigen Mischung von frischem gemahlenem Knoblauch und Salz sowie allen weiteren in kristalliner Form zuzugebenden Zusätzen, wie Mononatriumglutamat (MSG), versetzt, diese Komponenten in einer Misch- und Zerkleinerungsvorrichtung vorzerkleinert, vorzugsweise auf eine Teilchengröße der Basilikumblätter von durchschnittlich 1 bis 5 mm, diesen vorzerkleinerten Komponenten mindestens etwa 20 % Hartkäse in zerkleinerter Form, wobei mindestens 90 % des Käses eine Teilchengröße < 2 mm aufweisen, zusetzt, und wobei der Wassergehalt des Käses 25 bis 50 % beträgt mit der Maßgabe, daß das Gewichtsverhältnis seines Kochsalzgehaltes zu seinem Wassergehalt < 1 : 5 ist, und diese Komponenten innig unter weiterem Zerkleinern untermischt, oder die Kombination von Basilikum, gemahlenem Knoblauch und Salz dem in der Misch- und Zerkleinerungsvorrichtung vorgelegtem vorzerkleinertem Käse zufügt und die Komponenten dann der Vorzerkleinerung unterzieht, dann die Speisefette, vorzugsweise in Form eines plastischen Fettgemisches zufügt und die gesamten Komponenten weiter zerkleinert und homogenisiert, wobei bei einem gegebenenfalls vorgenommenen Zusatz von Mononatriumglutamat das Verhältnis der Summe der Anteile an Basilikum und Knoblauch sowie gegebenenfalls weiteren frischen Kräutern in Gew.-% zur Summe der Anteile an Kochsalz und Mononatriumglutamat (MSG) in Gew.-% in einem Bereich von 3 : 1 bis 5 : 1 liegt, mit der Maßgabe, daß das Gewichtsverhältnis von MSG zu Kochsalz höchstens 1 : 3 beträgt.

18. Verfahren nach Anspruch 17, dadurch gekennzeichnet, daß erntefrisch tiefgefrorenes Basilikum verwendet wird, das vor dem Zerkleinern durch Abklopfen von Stengeln befreit ist.

19. Verfahren nach Anspruch 17 oder 18, dadurch gekennzeichnet, daß eventuell gewaschenes Basilikum vor dem Einfrieren oder Weiterverarbeiten bei maximal 30 °C von anhaftenden Wasser befreit wird.

20. Verfahren nach Anspruch 17 bis 19, dadurch gekennzeichnet, daß als Zerkleinerungs- und Mischvorrichtung ein Kutter verwendet wird.

21. Verfahren nach Anspruch 17 bis 20, dadurch gekennzeichnet, daß als Käse Parmesan oder Pecorino verwendet wird.

22. Verfahren nach Anspruch 17 bis 22, dadurch gekennzeichnet, daß als Speisefett ein plastisches Fettgemisch eingesetzt wird.

23. Verfahren nach Anspruch 17 bis 22, dadurch gekennzeichnet, daß unter Schutzgas gearbeitet wird.

24. Verfahren nach Anspruch 23, dadurch gekennzeichnet, daß Trockeneis (festes $CO_2$) als Schutzgas und Kühlmittel in die Misch- und Zerkleinerungsvorrichtung gegeben wird.

**Claims**

1. Ready-to-use, storage-stable herb seasoning paste, particularly for dishes made of farinaceous

**0 021 313**

products, containing basil in an amount of from 8 to 80 % by weight, garlic in an amount of 0.1 to 8 % by weight, hard cheese in an amount of up to 80 % by weight, edible fat(s) and, inclusive of the amount of water from the three first-mentioned components, from 12 to 60 % by weight of water, as well as optionally further seasoning herbs, seasoning additives, preserving and/or extending agents, characterized in that it contains fresh basil, i. e. such as has neither been dried nor heated to temperatures of above 70 °C and fresh garlic, free from added preserving agents, which are quoted on page 2722 in the Official Bulletin of the Federal Republic of Germany, 1977, Table I, in that it contains added sodium chloride as well as optionally MSG in amounts such that the ratio of the sum total of the proportionate amounts of basil and garlic as well as optionally further fresh herbs in percent by weight to the sum total of the proportionate amounts of sodium chloride and monosodium glutamate (MSG) in percent by weight is within a range of from 3 : 1 to 5 : 1, with the proviso that the weight ratio of MSG to sodium chloride amount at most to 1 : 3, in that the content of hard cheese is at least 20 % by weight, in that the water content of the hard cheese ranges from 25 to 50 % by weight, with the proviso that the weight ratio of its salt content to its water content be less than 1 : 5, and in that the weight ratio of the total water content to the total content of sodium chloride and MSG is greater than 4 : 1.

2. The herb seasoning paste according to claim 1, characterized in that it contains from 9 to 60, preferably from 10 to 40 and especially from 12 to 24 % by weight of basil.

3. The herb seasoning paste according to claim 1 or 2, characterized in that it contains basil processed right after harvesting and/or frozen basil.

4. The herb seasoning paste according to one of claims 1 to 3, characterized in that it contains from 0.5 to 6, preferably from 1 to 5 and especially from 1.5 to 3.5 % by weight of garlic.

5. The herb seasoning paste according to one of claims 1 to 4, characterized in that it contains from 35 to 75, preferably from 40 to 65 and especially from 45 to 60 % by weight of hard cheese.

6. The herb seasoning paste according to one of claims 1 to 5, characterized in that it contains a hard cheese of an intensive flavor, especially Parmesan and/or Pecorino.

7. The herb seasoning paste according to one of claims 1 to 6, characterized in that it contains hard cheese having a water content of a most 45, preferably of at most 40 and especially of not more than 35 % by weight.

8. The herb seasoning paste according to one of claims 1 to 7, characterized in that it contains hard cheese, in which the weight ratio of its salt content to its water content is less than 1 : 6 and preferably less than 1 : 8.

9. The herb seasoning paste according to one of claims 1 to 8, characterized in that it has a weight ratio of the total water content to the total content of sodium chloride and MSG of at least 4.4 : 1 and preferably of more than 4.6 : 1.

10. The herb seasoning paste according to one of claims 1 to 9, characterized in that it has been adjusted through corresponding selection of the admixed edible fat proportion as to type and amount to the desired consistency.

11. The herb seasoning paste according to one of claims 1 to 10, characterized in that it contains from 7 to 50, preferably from 12 to 45 and especially from 18 to 36 % by weight of admixed edible fat(s).

12. The herb seasoning paste according to one of claims 1 to 11, characterized in that it contains as admixed edible fat(s) a plastic fat or, resp., fat mixture and especially a mixture of fats or, resp., oils that are liquid at room temperature and fats which melt at from 35 to 40 °C, as well as optionally minor amounts, compared with the above-mentioned types of fats, of high-melting fats, especially hardened plant oils.

13. The herb seasoning paste according to one of claims 1 to 12, characterized in that it contains as admixed edible fat(s) at least in part fat(s) or, resp., oil(s) having a strong characteristic flavor of its (their) own, especially olive oil, anchovis oil, lard and/or bacon extract.

14. The herb seasoning paste according to one of claims 1 to 13, characterized in that it contains further, preferably fresh seasoning herbs, especially marjoram, oregano, parsley, lovage, chives and/or dill.

15. The herb seasoning paste according to one of claims 1 to 14, characterized in that it contains further seasoning additives, especially comminuted nuts and/or pine nuts.

16. The herb seasoning paste according to one of claims 1 to 15, characterized in that it contains extenders, especially fresh, color-intensive green vegetable proportions of preferably at best weakly distinctive flavor of their own, especially spinach.

17. A method of producing a ready-to-use storage-stable herb seasoning paste, containing (percentage indications = % by weight) from 8 to 80 % basil from 0.2 to 8 % garlic up to 80 % hard cheese edible fats from 12 to 80 % water (inclusive of the water quantities contained in components a) to c)) optionally further seasoning herbs, seasoning additives, preserving and/or extending agents, characterized by mixing fresh basil leaves freed from the stem with an intimate mixture of freshly ground garlic and salt as well as all further additives added in crystalline form, such as monosodium glutamate (MSG), by pre-comminuting these components in a mixing and comminuting device, preferably to a particle size of the basil leaves of on the average from 1 to 5 mm, by adding to said pre-comminuted components at least about 20 % hard cheese in comminuted form, with at least 90 % of the cheese having a particle size of less than 2 mm, and with the water content of the cheese amounting to from 25 to 50 %, with the proviso that the weight ratio of its sodium chloride content to its water content be less than 1 : 5, and by intimately intermingling said components under further comminution, or by adding the combination of basil, ground garlic and salt to the pre-comminuted cheese presented in the mixing and comminuting device and subjecting the components to the pre-comminution then, by then adding the edible fats, preferably in the form of a plastic mixture of fats, and by further comminuting and homogenizing the entire components, with, in the case of an optional addition of monosodium glutamate, the ratio of the total of the proportions of basil and garlic as well as optionally further fresh herbs in percent by weight to the total of the proportions of sodium chloride and monosodium glutamate (MSG) in percent by weight being within a range of from 3 : 1 to 5 : 1, with the proviso that the weight ratio of MSG to sodium chloride amount to at least 1 : 3.

18. The method of claim 17, characterized in that freshly harvested, deep-frozen basil is used, which has been freed from stems by means of beating prior to comminution.

19. The method of claim 17 or 18, characterized in that possibly washed basil is freed from adherent water prior to freezing or further processing at a maximum of 30 °C.

20. The method of claim 17 to 19, characterized in that a cutter is used as comminuting and mixing device.

21. The method of claim 17 to 20, characterized in the Parmesan or Pecorino is used as cheese.

22. The method of claim 17 to 22, characterized in that a plastic mixture of fats is used as edible fat.

23. The method of claim 17 to 22, characterized in that work is conducted under protective gas.

24. The method of claim 23, characterized in that dry ice (solid $CO_2$) is added as protective gas and coolant to the mixing and comminuting device.

## Revendications

1. Pâte d'assaisonnement aux herbes, stable au stockage et prête à l'usage, en particulier pour plats de pâtes alimentaires, contenant du basilic en une quantité de 8 à 80 % en poids, de l'ail en une quantité de 0,1 à 8 % en poids, du fromage à pâte dure en une quantité allant jusqu'à 80 % en poids, une ou plusieurs graisses alimentaires et, y compris la quantité d'eau provenant des trois constituants mentionnés en premier, 12 à 80 % en poids d'eau, ainsi que, éventuellement, des plantes condimentaires supplémentaires, des additifs d'assaisonnement, des agents conservants et/ou diluants, caractérisée en ce qu'elle contient du basilic frais, c'est-à-dire ni séché, ni chauffé à des températures supérieures à 70 °C, et de l'ail frais, qui sont exempts d'agents conservants ajoutés mentionnés page 2722 du Journal Officiel de la République Fédérale d'Allemagne, 1977, Tableau I ; qu'elle contient du sel de table ajouté et éventuellement du MSG en des quantités telles que le rapport entre la somme, en %-poids, des constituants basilic et ail, ainsi que les éventuelles autres herbes fraîches, et la somme, en %-poids, des constituants sel de table et monoglutamate de sodium (MSG), se trouve dans un intervalle compris entre 3 : 1 et 5 : 1, à la condition que le rapport pondéral entre le MSG et le sel de table soit au maximum de 1 : 3 ; que la teneur en fromage à pâte dure est d'au moins 20 % en poids ; que la teneur du fromage à pâte dure en eau est comprise entre 20 et 50 % en poids, à la condition que le rapport pondéral entre sa teneur en sel et sa teneur en eau soit inférieur à 1 : 5 ; et que le rapport pondéral entre la teneur totale en eau et la teneur totale en sel de table et en MSG soit supérieur à 4 : 1.

2. Pâte d'assaisonnement aux herbes selon la revendication 1, caractérisée en ce qu'elle contient 9 à 60, de préférence 10 à 40, et en particulier 12 à 24 % en poids de basilic.

3. Pâte d'assaisonnement aux herbes selon l'une quelconque des revendications 1 ou 2, caractérisée en ce qu'elle contient du basilic mis en œuvre immédiatement après la récolte et/ou congelé.

4. Pâte d'assaisonnement aux herbes selon l'une quelconque des revendications 1 à 3, caractérisée en ce qu'elle contient 0,5 à 6, de préférence 1 à 5, et en particulier 1,5 à 3,5 % en poids d'ail.

5. Pâte d'assaisonnement aux herbes selon l'une quelconque des revendications 1 à 4, caractérisée en ce qu'elle contient 35 à 75, de préférence 40 à 65 et en particulier 45 à 60 % en poids de fromage à pâte dure.

6. Pâte d'assaisonnement aux herbes selon l'une quelconque des revendications 1 à 5, caractérisée en ce qu'elle contient un fromage à pâte dure à goût fort, en particulier du parmesan et/ou du pecorino.

7. Pâte d'assaisonnement aux herbes selon l'une quelconque des revendications 1 à 6, caractérisée en ce qu'elle contient du fromage à pâte dure ayant une teneur en eau au plus égale à 45, de préférence au plus égale à 40 et en particulier non supérieure à 35 % en poids.

8. Pâte d'assaisonnement aux herbes selon l'une quelconque des revendications 1 à 7, caractérisée en ce qu'elle contient du fromage à pâte dure dans lequel le rapport pondéral entre sa teneur en sel et sa teneur en eau est inférieur à 1 : 6 et de préférence inférieur à 1 : 8.

9. Pâte d'assaisonnement aux herbes selon l'une quelconque des revendications 1 à 8, caractérisée en ce qu'elle présente un rapport pondéral entre sa teneur totale en eau et sa teneur totale en sel de table et en MSG d'au moins 4,4 : 1 et de préférence supérieure à 4,6 : 1.

10. Pâte d'assaisonnement aux herbes selon l'une quelconque des revendications 1 à 9, caractérisée en ce qu'elle est ajustée à la consistance voulue grâce au choix approprié de la nature et de la quantité de la partie graisse alimentaire ajoutée.

11. Pâte d'assaisonnement aux herbes selon l'une quelconque des revendications 1 à 10, caractérisée en ce qu'elle contient 7 à 50, de préférence 12 à 45 et en particulier 18 à 36 % en poids de graisse(s) alimentaire(s) ajoutée(s).

12. Pâte d'assaisonnement aux herbes selon l'une quelconque des revendications 1 à 11, caractérisée en ce qu'elle contient, en tant que graisse(s) alimentaire(s) ajoutée(s) une graisse ou un mélange de graisses plastiques et en particulier un mélange de graisses ou d'huiles liquides à la température ambiante et de graisses fondant à 35 à 40 °C, ainsi que, éventuellement, de faibles quantités, par rapport aux types de graisses ci-dessus, de graisses à point de fusion élevé, en particulier d'huiles végétales durcies.

13. Pâte d'assaisonnement aux herbes selon l'une quelconque des revendications 1 à 12, caractérisée en ce qu'elle contient en tant que graisse(s) alimentaire(s) ajoutée(s), au moins en partie, une ou des graisses, ou une ou des huiles ayant un goût propre caractéristique violent, en particulier l'huile d'olive, l'huile d'anchois, le saindoux et/ou le lard fondu.

14. Pâte d'assaisonnement aux herbes selon l'une quelconque des revendications 1 à 13, caractérisée en ce qu'elle contient d'autres plantes condimentaires, de préférence fraîches, en particulier la marjolaine, l'origan, le persil, l'ache, la ciboulette et/ou l'aneth.

15. Pâte d'assaisonnement aux herbes selon l'une quelconque des revendications 1 à 14, caractérisée en ce qu'elle contient des additifs condimentaires supplémentaires, en particulier des noix et/ou des pignons broyés.

16. Pâte d'assaisonnement aux herbes selon l'une quelconque des revendications 1 à 15, caractérisée en ce qu'elle contient des diluants en particulier des légumes verts frais, à couleur intense, ayant de préférence tout au plus un goût propre faiblement marqué, en particulier l'épinard.

17. Procédé de fabrication d'une pâte d'assaisonnement aux herbes, stable au stockage et prête à l'usage, contenant (indication en pourcentage = %-poids) 8 à 80 % de basilic, 0,2 à 8 % d'ail, jusqu'à 80 % de fromage à pâte dure, des graisses alimentaires, 12 à 80 % d'eau (y compris la quantité d'eau contenue dans les constituants (a) à (c)), éventuellement d'autres plantes condimentaires, des additifs d'assaisonnement, des agents conservants et/ou diluants, caractérisé en ce que l'on additionne du basilic frais, débarrassé des tiges, d'un mélange intime d'ail fraîchement moulu et de sel, ainsi que de tous les autres additifs à ajouter sous forme cristalline, comme le monoglutamate de sodium (MSG), que l'on effectue un prébroyage de ces constituants dans un équipement de mélange et de broyage, de préférence à une granulométrie des feuilles de basilic égale en moyenne à 1 à 5 mm, que l'on ajoute à ces constituants prébroyés au moins environ 20 % de fromage à pâte dure sous forme broyée, où au moins 90 % du fromage présentent une granulométrie inférieure à 2 mm, la teneur en eau du fromage étant de 25 à 50 %, à la condition que le rapport pondéral entre sa teneur en sel de table et sa teneur en eau soit inférieur à 1 : 5, et que l'on mélange intimement entre eux ces constituants, en continuant le broyage, ou bien que l'on ajoute la combinaison de basilic, d'ail moulu et de sel au fromage prébroyé se trouvant dans l'appareil de mélange et de broyage et que l'on soumet ensuite les constituants au prébroyage, que l'on ajoute ensuite les graisses alimentaires, de préférence sous la forme d'un mélange plastique de graisses et que l'on broie encore et homogénéise la totalité des constituants, le rapport de la somme, en %-poids, des constituants basilic et ail, ainsi que des éventuelles autres herbes fraîches, et la somme, en %-poids, des constituants sel de table et monoglutamate de sodium (MSG) étant, dans le cas d'une addition préalable éventuelle de monoglutamate de sodium, compris entre 3 : 1 et 5 : 1, à la condition que le rapport pondéral entre le MSG et le sel de table soit d'au plus 1 : 3.

18. Procédé selon la revendication 17, caractérisé en ce que l'on utilise du basilic fraîchement récolté et surgelé, lequel, avant le broyage, a été débarrassé de ses tiges par tapotage.

19. Procédé selon l'une quelconque des revendications 17 ou 18, caractérisé en ce que le basilic, éventuellement lavé, est débarrassé de l'eau adhérente au maximum à 30 °C avant congélation ou transformation ultérieure.

20. Procédé selon l'une quelconque des revendications 17 à 19, caractérisé en ce que l'on utilise en tant qu'équipement de broyage et de mélange un cutter.

21. Procédé selon l'une quelconque des revendications 17 à 20, caractérisé en ce que l'on utilise en tant que fromage du parmesan ou du pecorino.

22. Procédé selon l'une quelconque des revendications 17 à 22, caractérisé en ce que l'on utilise en tant que graisse alimentaire un mélange plastique de graisses.

23. Procédé selon l'une quelconque des revendications 17 à 22, caractérisé en ce qu'on travaille sous gaz protecteur.

24. Procédé selon la revendication 23, caractérisé en ce que de la neige carbonique ($CO_2$ solide) est introduite dans l'équipement de mélange de broyage en tant que gaz protecteur et réfrigérant.